(19) Europäisches Patentamt

**European Patent Office**

**Office européen des brevets**

(11) Numéro de publication: **0 227 869**
**B1**

(12) **FASCICULE DE BREVET EUROPEEN**

(45) Date de publication du fascicule du brevet:
**01.06.88**

(21) Numéro de dépôt: **85402550.9**

(22) Date de dépôt: **19.12.85**

(51) Int. Cl.⁴: **B 60 G 21/04, F 16 F 1/38**

(54) **Palier d'articulation, notamment pour barre anti-devers de véhicule automobile.**

(43) Date de publication de la demande:
**08.07.87 Bulletin 87/28**

(45) Mention de la délivrance du brevet:
**01.06.88 Bulletin 88/22**

(84) Etats contractants désignés:
**BE DE GB IT SE**

(56) Documents cités:
**EP - A - 0 093 625**
**AT - B - 357 882**
**DE - A - 2 358 736**

(73) Titulaire: **REGIE NATIONALE DES USINES RENAULT,
Boîte postale 103 8-10 avenue Emile Zola,
F-92109 Boulogne-Billancourt (FR)**

(72) Inventeur: **Brauge-Boyer, Bernard, 2, rue de l'Ermitage,
F-91700 Sainte Geneviève des Bois (FR)**
Inventeur: **Molin, Pierre, 228, rue A. Briand,
F-78700 Conflans Sainte Honorine (FR)**

(74) Mandataire: **Réal, Jacques et al, Régie Nationale des
Usines Renault SCE 0804, F-92109 Boulogne Billancourt
Cedex (FR)**

## Description

La présente invention se rapporte à un palier d'articulation, notamment pour barre anti-dévers de véhicule automobile du type décrit dans le préambule de la revendication 1.

On connaît l'utilité d'une barre anti-dévers agissant lors de la prise d'un virage au cours duquel la roue intérieure est délestée aux dépens de la roue extérieure, sur laquelle la carrosserie s'incline. Ladite barre a pour mission de s'opposer à ce phénomène et a un rendement d'autant meilleur que, solidarisant les roues droite et gauche d'un même train, elle ramènera le plus possible la roue intérieure délestée à la même hauteur que la roue extérieure, par rapport à la carrosserie du véhicule, maintenant alors celle-ci horizontale.

Le rendement de la barre anti-dévers ainsi défini est favorablement influencé par une raideur importante des paliers qui la lient à la caisse, tout particulièrement les raideurs verticale, conique et de torsion, qui s'opposent à une déformation du train dans les virages; celle-ci donne lieu à l'introduction d'effets angulaires indésirables au niveau des roues, tels que du carrossage ou du braquage qui sont néfastes à la tenue de route.

Toutefois, les raideurs verticale, conique et de torsion qui, comme on l'a vu plus haut, ont des effets favorables, ne doivent pas s'accompagner d'une raideur des paliers selon l'axe longitudinal du véhicule.

Dans le cas d'un choc de la roue sur des obstacles rencontrés sur son trajet (raccords de revêtement, bords de trous, pavés, etc.), la transmission de ce choc à la caisse est d'autant moins grande que le débattement longitudinal de la roue concernée est important, déterminant ainsi une dissipation de l'énergie incidente dans le train.

Les paliers généralement utilisés ne présentent pas les caractéristiques favorables ci-dessus.

Ils sont pour la plupart constitués d'un anneau plein en caoutchouc présentant une même raideur dans tous les sens.

Une première amélioration a toutefois été obtenue en aménageant des alvéoles dans l'épaisseur du caoutchouc selon l'axe longitudinal du véhicule, permettant donc un certain débattement de la barre horizontale dans ce sens, tandis que des inserts rigides ont été noyés dans la masse du palier selon l'axe vertical afin d'augmenter sa rigidité.

Toutefois cette disposition n'apporte aucune amélioration au niveau de l'augmentation de la raideur du palier en torsion, par rapport à la barre anti-dévers, sur laquelle ledit palier, qui ne lui est pas adhérisé pour des raisons de prix de revient, peut tourner.

De plus, la matière constitutive du palier est faite d'un caoutchouc unique et homogène dans tout son volume. Il possède donc dans son ensemble les mêmes caractéristiques d'amortissement et de raideur, alors que le passage des bruits dans sa masse n'est pas homogène; il peut ainsi être intéressant de disposer de zones de caractéristiques mécaniques différentes d'un point à l'autre du palier.

Le but de la présente invention est de constituer un palier améliorant les propriétés d'insonorisation et de tenue de route des trains pourvus de barres anti-dévers. Un tel palier est caractérisé par le fait que les blocs en élastomère sont au moins au nombre de quatre, disposés par deux de part et d'autre d'un plan de symétrie axial de la barre, chacune des paires de blocs constituant des espaces à l'intérieur desquels les butées de l'élément central, en permanence en contact avec la cage externe, peuvent se déplacer angulairement.

L'invention sera décrite au regard des figures 1 à 3 ci-jointes, données à titre d'exemple non limitatif, qui se rapportent respectivement:

la figure 1, à une vue en perspective d'un palier selon l'état de la technique;

la figure 2, à une vue latérale d'un palier selon l'invention;

la figure 3, à un détail grossi d'une variante de la figure 2.

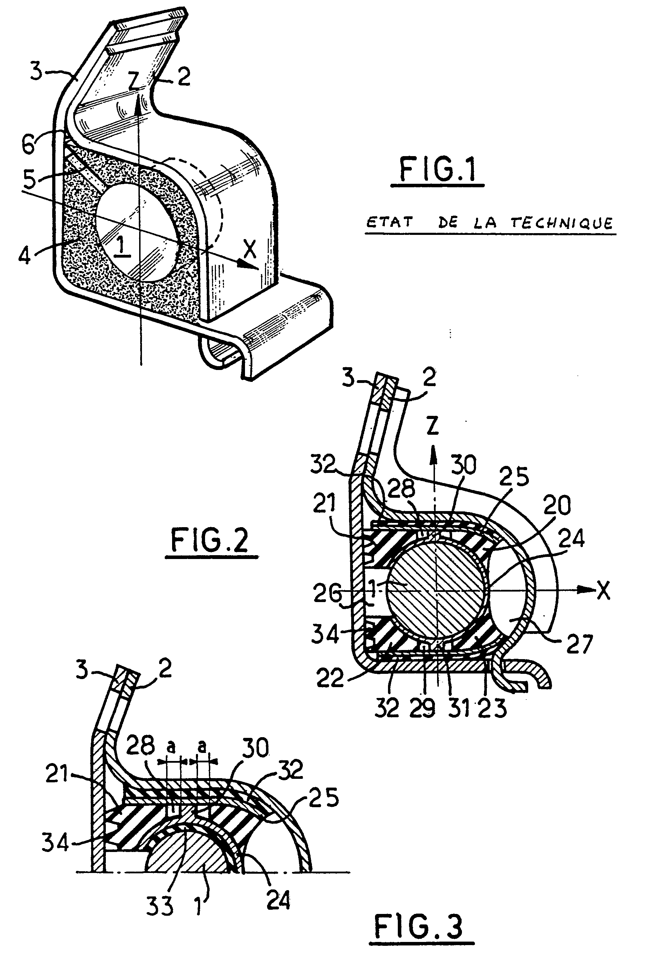

Le palier illustré par la figure 1 est un palier généralement utilisé pour relier une barre anti-dévers 1 à la caisse, non figurée, par l'intermédiaire des brides 2-3.

Il est constitué d'une bague en élastomère 4, fendue en 5 pour permettre son passage sur la barre 1.

On voit que non seulement les raideurs selon x et y ont toutes les raisons d'être les mêmes, compte tenu de l'homogénéité de la masse constituant le palier 4, mais qu'en fait, et contrairement à ce qui est souhaitable, la raideur est plus faible selon l'axe z.

En effet, du fait de la courbure de la bride 2 à sa jonction à la bride 3, on constate la présence d'un volume vide 6 qui va être occupé par fluage du caoutchouc au niveau de la fente 5 lors d'un mouvement selon l'axe z de la bague 1. Cela détermine un surcroît de souplesse du palier 4 dans ce sens, nuisible au maintien de la bonne géométrie du train lors du virage, comme on l'a expliqué plus haut.

Le palier selon l'invention est illustré à la figure 2.

On retrouve comme précédemment la barre anti-dévers 1 et les brides 2-3 qui la solidarisent à la caisse, non représentée.

On voit toutefois que, dans le cas présent, le palier est composite, constitué de plusieurs éléments en élastomère 20 à 23 adhérisés à une cage interne 24 et à une cage externe 25. On notera que les éléments 20 à 23 sont séparés les uns des autres par des espaces 26-27, donnant une souplesse importante au palier selon l'axe x, et par d'autres espaces 28-29 situés respectivement aux parties supérieure et inférieure du palier.

La cage 24 comporte deux butées 30-31, situées dans les espaces 28-29 et entrant en contact avec la cage 25; cette dernière est séparée de la bride 2 par une mince couche d'élastomère 32 qui lui est adhérisée et qui assure une filtration des vibrations au niveau de la bride 2. On voit qu'en variante, à la figure 3, on adhérise de façon analogue une couche d'élastomère 33 à la face interne de la cage 24 pour filtrer les vibrations au niveau de la barre 1.

On notera encore la présence de cannelures 34 à la face extérieure des éléments 21, 22 en contact avec la bride 3.

Conformément à l'effet recherché, on constate que la raideur selon l'axe des z est grande, puisque les butées 30-31 assurent le contact entre la barre 1 et la bride 2, la présence d'élastomère étant limitée à la mince couche 32.

De plus, les butées 30-31 se prolongent sur toute la largeur du palier, elles s'opposent de la même façon à toute déformation conique du palier.

D'autre part (voir en particulier la figure 2), le contact entre le palier et la barre 1 est assuré par la cage 24, rigide et de préférence métallique; le rendement de la barre en torsion est bon, car on peut très notablement limiter les mouvements angulaires relatifs entre la barre 1 et la cage 24, au regard de ceux qui existaient lors de l'utilisation des paliers classiques, dont la zone de contact était établie par l'élastomère lui-même, non adhérisé à la barre.

En ce qui concerne les débattements longitudinaux de la barre 1, on voit qu'ils sont améliorés par la présence des espaces 28-29 favorisant les déplacements d'amplitude 2 × a sous faibles efforts, en accompagnant les mouvements de la roue. La rencontre entre les butées 30-31 et les éléments en élastomère 20 à 23 détermine ensuite un freinage progressif du recul du train qui «avale» l'obstacle en douceur et atténue sa bruyance. Cette atténuation est encore améliorée en ajustant expérimentalement aux besoins du train les caractéristiques d'amortissement, de raideur, de dureté propres à chacun des éléments élastiques 20 à 23, en agissant sur la nature de leur composition.

## Revendications

1. Palier d'articulation d'une barre, notamment pour barre anti-dévers de véhicule automobile, du type constitué par un élément central (24) fixé à la barre (1), comportant des butées (30, 31) susceptibles d'entrer en contact avec une cage extérieure (25), à laquelle il est par ailleurs solidarisé par des blocs (20 à 24) en élastomère, caractérisé par le fait que lesdits blocs (20 à 24) en élastomère sont au moins au nombre de quatre, disposés par deux de part et d'autre d'un plan de symétrie axial de la barre (1), chacune des paires de blocs (20-21, 22-23) constituant des espaces (28-29) à l'intérieur desquels les butées (30-31) de l'élément central (24), en permanence en contact avec la cage externe (25), peuvent se déplacer angulairement.

2. Plan d'articulation suivant la revendication 1, caractérisé en ce que la face des cages (24, 25) opposée aux éléments (20 à 23) est pourvue d'une mince couche d'élastomère (32-33) qui leur est adhérisée.

3. Palier d'articulation suivant la revendication 1, caractérisé en ce que la face des éléments (21, 22) au contact avec la bride (3) est munie de cannelures (34).

4. Palier d'articulation selon la revendication 1, caractérisé en ce que les éléments en élastomère (20 à 23) ont des propriétés mécaniques différentes, ajustées expérimentalement aux besoins de chaque train.

## Patentansprüche

1. Schwenklager, insbesondere für Kraftfahrzeug-Drehstabstabilisatoren, mit einem am Drehstab (1) befestigten Mittenteil (24), das Anschläge aufweist, die ein äusseres Gehäuse (25) berühren können, mit dem es ausserdem über Gummiblöcke (20 bis 24) verbunden ist, dadurch gekennzeichnet, das wenigstens vier Gummiblöcke (20 bis 24) vorgesehen sind, die beidseits der axialen Symmetrieebene des Drehstabs (1) angeordnet sind, wobei jedes Gummiblockpaar (20-21, 22-23) einen Hohlraum (28, 29) bildet, in deren Inneren die Anschläge (30, 31) des Mittenteils (24), die kontinuierlich das äussere Gehäuse (25) berühren, eine Winkelverschiebung durchführen können.

2. Schwenklager nach Anspruch 1, dadurch gekennzeichnet, dass die den Teilen (20 bis 23) gegenüberliegende Fläche der Gehäuse (24, 25) mit einer dünnen aufgeklebten Gummischicht (32-33) versehen ist.

3. Schwenklager nach Anspruch 1, dadurch gekennzeichnet, dass die den Flansch (3) berührende Fläche der Teile (21, 22) mit Rippen (34) versehen ist.

4. Schwenklager nach Anspruch 1, dadurch gekennzeichnet, dass die Gummiteile (20 bis 23) mechanisch unterschiedliche Eigenschaften aufweisen, die an die jeweiligen Anforderungen der Achse angepasst sind.

## Claims

1. A pivot mounting for a bar, in particular an anti-roll bar of a motor vehicle, of the type formed by a central element (24) fixed to the bar (1), comprising abutments (30, 31) capable of coming into contact with an external cage (25) to which it is also fixed by blocks (20 to 24) of elastomer material characterised in that said blocks (20 to 24) of elastomer material are at least four in number and are disposed in twos on respective sides of an axial plane of symmetry of the bar (1), each of the pairs of blocks (20-21, 22-23) forming spaces (28, 29) within which the abutments (30-31) of the central element (24), permanently in contact with the external cage (24), can be angularly displaced.

2. A pivot mounting according to Claim 1, characterised in that the faces of the cages (24, 25) opposite to the elements (20 to 23) are provided with a thin layer of elastomer material (32-33) which is bonded thereto.

3. A pivot mounting according to Claim 1, characterised in that the faces of the elements (21, 22) in contact with the flange (3) are provided with channels (34).

4. A pivot mounting according to Claim 1, characterised in that the elements (20 to 23) of elastomer material have different mechanical properties which are adapted by experiment to the requirements of each axle assembly.

FIG.1

ETAT DE LA TECHNIQUE

FIG.2

FIG.3